# EUROPEAN PATENT SPECIFICATION

(11) **EP 3 349 154 B1**
(45) Date of publication and mention of the grant of the patent: **18.08.2021**
(21) Application number: 18151779.8
(22) Date of filing: 16.01.2018
(51) Int. Cl.: G06Q 10/00, H04N 9/31, G03B 21/14

(54) **PROJECTION APPARATUS MAINTENANCE SYSTEM AND PROJECTION APPARATUS MAINTENANCE METHOD**
WARTUNGSSYSTEM UND WARTUNGSMETHODE FÜR PROJEKTIONSGERÄTE
SYSTÈME ET PROCÉDÉ DE MAINTENANCE D'APPAREIL DE PROJECTION

(30) Priority: 16.01.2017 CN 201710029608
(43) Date of publication of application: 18.07.2018
(73) Proprietor: Coretronic Corporation, Hsin-Chu 300 (TW)
(72) Inventor: WU, Chao-Wang, 300 Hsin-Chu (TW); WU, Po-Yen, 300 Hsin-Chu (TW); LIAO, Shu-Hui, 300 Hsin-Chu (TW)
(74) Representative: Ter Meer Steinmeister & Partner

(56) References cited:
- EP-A1- 2 388 698
- GB-A- 2 536 948
- Anonymous: "iProjection App - Epson America, Inc.", , 27 October 2016 (2016-10-27), XP055454169, Retrieved from the Internet: URL:https://web.archive.org/web/2016102722 3058/http://www.epson.com:80/cgi-bin/Store /jsp/Landing/ProjectorApp.do?iref=van_proj ector-app [retrieved on 2018-02-26]
- LCD PROJECTOR: "Sony SuperBright XGA Multimedia LCD Projector (VPL-PX15)", INTERNET CITATION, 27 July 2003 (2003-07-27), XP002342920, Retrieved from the Internet: URL:http://www.lcdprojectoronline.com/vpl- px15.html [retrieved on 2005-08-31]
- DATABASE WPI Week 201326 Thomson Scientific, London, GB; AN 2013-D86734 XP002778585, & CN 102 866 567 A (SHENZHEN ACTO DIGITAL VIDEO TECHNOLOGY C) 9 January 2013 (2013-01-09)
- DATABASE WPI Week 201717 Thomson Scientific, London, GB; AN 2017-14488P XP002778586, & CN 106 302 743 A (CHENGDU XGIMI TECHNOLOGY CO LTD) 4 January 2017 (2017-01-04)

## Description

### BACKGROUND OF THE INVENTION

### 1. Field of the Invention

The invention relates to an equipment maintenance system, and particularly relates to a projection apparatus maintenance system and a projection apparatus maintenance method thereof.

### 2. Description of Related Art

When a projection apparatus leaves the factory, the manufacturer usually attaches a manual or teaching disc to the product package to inform a user the operating instructions and precautions regarding the projection apparatus. When the user discovers a problem during the operation of the projection apparatus, the user will respond to the dealer and the dealer will ask the manufacturer for the solution as needed. In general, the user often needs to spend few days or even weeks from the user responded the problem to the dealer until the dealer offers a solution, therefore it seriously affects the user experience. In addition, since most of the projection apparatuses are limited without the network communication function, the subsequent management and maintenance cannot be effective on the sold projection apparatuses for the dealer.

Epson iProtection App, Epson America, Inc. discloses a system comprising a projection apparatus and a mobile apparatus, wherein the mobile apparatus has installed the Epson iProtection app. The app is easy to use and navigate, with menu options that help bring the mobile apparatus content to the big screen. To this end the mobile apparatus needs to be connected to the projectors network, the app has to be launched and a projector has to be selected. Thereafter the web page, document or photo to be projected needs to be selected to bring the corresponding content to the big screen.

GB 2536948 A is concerned with a system and a method for monitoring maintenance of appliances and discloses a system comprising a machine readable tag, e.g. a passive NFC tag (near field communication tack), mounted in physical association with an appliance, a portable processing device which stores maintenance data for the appliances and a user interface for providing data to users. Each tag being physically associated with an appliance stores a identifier of the appliance. The portable processing device receives from the tag its identifying information by a one directional transfer of data.

LCD Projector: "Sony Superbright XGA Multimedia LCG Projector (VPL-PX15) discloses a projector featuring wireless networking capability. The projector can be accessed remotely via the internet for maintenance, or for the purpose of uploading files to the projector's memory. Further, when the projector enters the network, files shared in that network can be retrieved and opened for projection using the supplied remote control unit. Any PC within the same network can communicate with the projector via the web browser. Operating presentations, organizing files and controlling the projector and projector set up parameters can all be done from these PCs through the network.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

In view of this, a projection apparatus maintenance system and a projection apparatus maintenance method are provided to improve the maintenance efficiency of the projection apparatus.

The object is solved by the features of the independent claims. Preferred embodiments are given in the dependent claims.

An embodiment of the invention provides a projection apparatus maintenance system which includes a projection apparatus and a mobile apparatus. The projection apparatus has a first processor, a first communication interface and a projection unit. The first processor is coupled to the first communication interface and the projection unit. The projection unit projects a projection image according to an image data. The mobile apparatus has a second processor and a second communication interface. The second processor is coupled to the second communication interface. The mobile apparatus has installed an application program. The mobile apparatus interacts with the projection apparatus by activating the application program. When the projection apparatus is connected to the mobile apparatus, the projection apparatus transmits a usage data corresponding to the projection apparatus through the first communication interface. The mobile apparatus receives the usage data from the projection apparatus through the second communication interface. The mobile apparatus receives a maintenance data corresponding to the projection apparatus from a network server through the second communication interface. The application program of the mobile apparatus controls the second processor to generate at least one maintenance command according to at least one of the usage data and the maintenance data and to transmit the at least one maintenance command through the second communication interface. The projection apparatus receives the at least one maintenance command through the first communication interface. The first processor of the projection apparatus executes a maintenance operation corresponding to the projection apparatus based on the at least one maintenance command.

In some embodiments, the at least one maintenance command may comprise a projection parameter adjustment command, wherein the maintenance operation executed by the first processor of the projection apparatus comprises a projection parameter adjustment operation corresponding to the projection unit, wherein the projection parameter adjustment operation is configured to adjust the projection image.

In some embodiments, the at least one maintenance command may comprise a schedule command, wherein the maintenance operation executed by the first processor of the projection apparatus comprises a specific schedule work which is executed according to a system time of the projection apparatus.

In some embodiments, the at least one maintenance command may comprise a state switch command, wherein the maintenance operation executed by the first processor of the projection apparatus comprises switching an apparatus state of the projection apparatus from a first state to a second state.

In some embodiments, the mobile apparatus may further comprise a sensing component coupled to the second processor and the sensing component senses an environmental information, wherein the application program of the mobile apparatus further controls the second processor to generate the at least one maintenance command according to the environmental information sensed by the sensing component.

In some embodiments, the sensing component may comprise an image capturing device which is configured to capture the projection image projected by the projection unit of the projection apparatus.

In some embodiments, the environmental information sensed by the sensing component may comprise the projection image captured by the image capturing device.

In some embodiments, the application program of the mobile apparatus may further transmit the usage data to the network server through the second communication interface, and the network server provides the maintenance data in correspondence to the transmitted usage data.

In some embodiments, the usage data may comprise at least one of a software information, a hardware information, a projection parameter information, a system time information, a system setting information, a usage record information and a malfunction information corresponding to the projection apparatus.

In some embodiments, the maintenance data may comprise at least one of a software update information, a hardware update information, a projection parameter update information, a system time update information, a system setting update information, a malfunction diagnostic information and a schedule setting update information.

In some embodiments, the mobile apparatus may further receive an advertisement pushing data corresponding to the projection apparatus from the network server through the second communication interface, and the mobile apparatus further presents the advertisement pushing data through the application program of the mobile apparatus.

Another embodiment of the invention provides a projection apparatus maintenance method for a projection apparatus having a communication interface and a projection unit. The projection unit projects a projection image according to an image data. The projection apparatus maintenance method includes: transmitting a usage data corresponding to the projection apparatus to a mobile apparatus through a communication interface; issuing a usage data corresponding to the projection apparatus to a mobile apparatus through a communication interface; transmitting the usage data to a network server through the mobile apparatus and receiving a maintenance data which is provided by the network server in correspondence to the transmitted usage data; receiving at least one maintenance command from the mobile apparatus through the communication interface; and executing a maintenance operation corresponding to the projection apparatus according to the at least one maintenance command.

In some embodiments, the at least one maintenance command comprises a projection parameter adjustment command, wherein the step of executing the maintenance operation corresponding to the projection apparatus according to the at least one maintenance command comprises executing a projection parameter adjustment operation corresponding to the projection unit according to the projection parameter adjustment command to adjust the projection image.

In some embodiments, the at least one maintenance command may comprise a schedule command, wherein the step of executing the maintenance operation corresponding to the projection apparatus according to the at least one maintenance command comprises executing a specific schedule work according to a system time of the projection apparatus and the schedule command.

In some embodiments, the at least one maintenance command may comprise a state switch command, wherein the step of executing the maintenance operation corresponding to the projection apparatus according to the at least one maintenance command comprises switching an apparatus state of the projection apparatus from a first state to a second state according to the state switch command.

In some embodiments, the at least one maintenance command may comprise a command generated by the mobile apparatus based on an environmental information sensed by a sensing component of the mobile apparatus.

In some embodiments, the sensing component may comprise an image capturing device which is configured to capture the projection image projected by the projection unit of the projection apparatus, wherein the environmental information sensed by the sensing component comprises the projection image captured by the image capturing device.

In the invention, the mobile apparatus has installed an application program, and the mobile apparatus interacts with the projection apparatus by activating the application program, wherein the step of transmitting the usage data to the network server and receiving the maintenance data which is provided by the network server corresponding to the transmitted usage data through the mobile apparatus comprises generating the at least one maintenance command according to at least one of the usage data and the maintenance data through the application program of the mobile apparatus.

Based on the above, the invention provides a projection apparatus maintenance system and a projection apparatus maintenance method that a specific application program is installed in the mobile apparatus, such that the mobile apparatus can connect and interact with the projection apparatus through the application program. The projection apparatus can send usage data to the mobile apparatus through the connection and the mobile apparatus can receive maintenance data corresponding to the projection apparatus from the network server. According to the received usage data and/or maintenance data, the mobile apparatus may transmit maintenance command to the projection apparatus and the projection apparatus may perform corresponding maintenance operation in accordance with this maintenance command to improve the maintenance efficiency and performance of the projection apparatus.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram illustrating a projection apparatus maintenance system according to an embodiment of the invention.
FIG. 2 is a schematic diagram illustrating a projection apparatus and a mobile apparatus according to an embodiment of the invention.
FIG. 3 is a flow chart illustrating a projection apparatus maintenance method according to an embodiment of the invention.
FIG. 4 is a flow chart illustrating a projection apparatus maintenance method according to another embodiment of the invention.
FIG. 5 is a schematic diagram illustrating a projection parameter adjustment operation according to an embodiment of the invention.
FIG. 6 is a schematic diagram illustrating a schedule work management according to an embodiment of the invention.
FIG. 7 is a schematic diagram illustrating an advertisement pushing data according to an embodiment of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

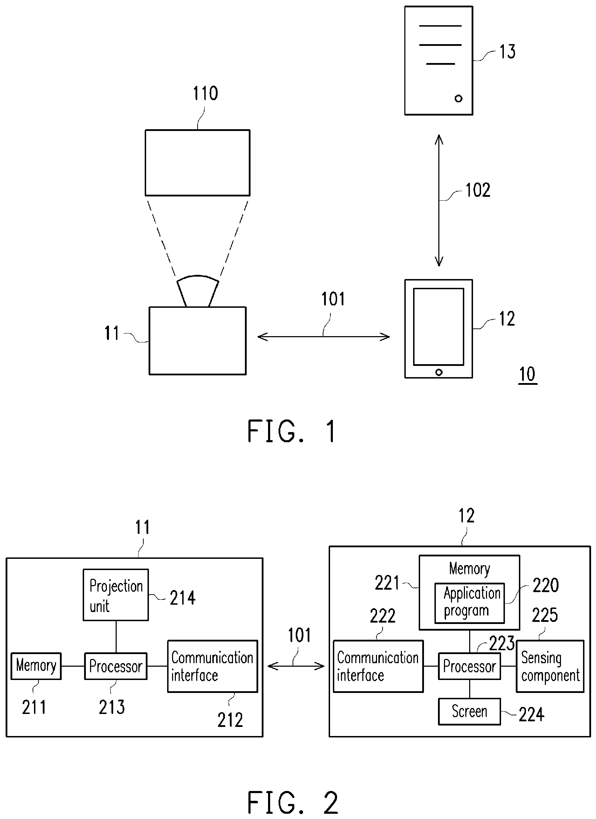

FIG. 1 is a schematic diagram illustrating a projection apparatus maintenance system according to an embodiment of the invention. Referring to FIG. 1, a projection apparatus maintenance system 10 includes a projection apparatus 11, a mobile apparatus 12, and a network server 13. The projection apparatus 11 is optical projector, such as an LCD (Liquid Crystal Digital) projector or a DLP (Digital Light Processing) projector, but the invention is not limited herein. The projection apparatus 11 is configured to emit light to project a projection image 110. For instance, when the light illuminates an object (e.g., a projection screen or a wall, etc.), the projection image 110 is presented on the object. The mobile apparatus 12 is a portable electronic device having a data transmission and computing function such as a smart phone, a remote controller, a tablet PC, a notebook computer, or a personal digital assistant (PDA). The network server 13 is a server host capable of data transfer, data storage and data computing functions, and the network server 13 is connected to the Internet in a wired or wireless manner. In addition, the number of each of the projection apparatus 11, the mobile apparatus 12, and the network server 13 may be one or more.

The projection apparatus 11 and the mobile apparatus 12 may communicate with each other via a connection 101 (also referred to as a first connection). The mobile apparatus 12 and the network server 13 may communicate with each other via a connection 102 (also referred to as a second connection). In the embodiment, the connection 101 may be a short range wireless communication connection. For example, the connection 101 may be a BlueTooth connection, a Wireless-Fidelity (WiFi) connection, a Near Field Communication (NFC) connection, an infrared connection, or a ZigBee connection, or other short range wireless communication. In the embodiment, the connection 102 may be an Internet connection. For example, the connection 102 includes a wired or wireless communication connection formed by any kinds of network node devices, such as at least one router and/or at least one base station, coupled in series. It is noted that, in another embodiment, the connection 101 may also refer to a physical wired connection formed by a physical wire or may be the same as the connection 102.

FIG. 2 is a schematic diagram illustrating a projection apparatus and a mobile apparatus according to an embodiment of the invention. Referring to FIG. 2, the projection apparatus 11 includes a memory 211, a communication interface 212 (also referred to as a first communication interface), a processor 213 (also referred to as a first processor), and a projection unit 214. The memory 211, the communication interface 212 and the projection unit 214 are all coupled to the processor 213. The memory 211 is configured to store data and may be one or a combination of a buffer memory, an internal storage medium, an external storage medium, or other types of storage devices. For example, the buffer memory may include a random access memory (RAM), a read only memory (ROM), or other similar devices. For example, the internal storage media may include a hard disk drive (HDD), a solid state disk (SSD), a flash storage device, or other similar device. For example, an external storage medium may include an external hard drive, a USB drive, a cloud drive, or other similar devices.

In the embodiment, the communication interface 212 includes basic circuit components configured to perform wireless transmission such as an antenna (not shown) and a radio frequency circuit (not shown). In the embodiment, the communication interface 212 is compatible with one or more short range wireless communication standards such as a Bluetooth communication protocol, a wireless fidelity communication protocol, a near field communication protocol, an infrared communication protocol or a ZigBee. In another embodiment, the communication interface 212 is compatible with one or more types of wireless communication standards such as 3rd Generation Generation (3G), Long Term Evolution (LTE), or General Packet Radio Service (GPRS). In another embodiment, the communication interface 212 is compatible with one or more physical wired interface standards, such as the USB interface standard or the Ethernet interface standard.

The processor 213 is configured to control various components (e.g., the memory 211, the communication interface 212, and the projection unit 214) within the projection apparatus 11 and to process data (e.g., the image data or other data). The processor 213 may be a central processing unit (CPU) or other programmable devices for general purpose or special purpose such as a microprocessor and a digital signal processor (DSP), a programmable controller, an application specific integrated circuit (ASIC), a programmable logic device (PLD) or other similar devices or a combination of above-mentioned devices.

The projection unit 214 includes at least one optical projection lens, a light source, and a light valve (not shown) and may project the projection image 110 according to the image data processed by the processor 213. It is noted that the number of each of the memory 211, the communication interface 212, the processor 213 and the projection unit 214 may be one or more. For example, in an embodiment, a communication interface 212 of the projection apparatus 11 is compatible with a wireless communication standard such as a Bluetooth communication protocol, and another communication interface 212 of the projection apparatus 11 is compatible with a physical wired interface standard such as a USB interface standard.

In the embodiment, the mobile apparatus 12 includes a memory 221, a communication interface 222 (also referred to as a second communication interface), and a processor 223 (also referred to as a second processor). The memory 221 and the communication interface 222 are both coupled to the processor 223. The memory 221 may include at least one of the buffer memory, the internal storage medium, and the external storage medium, or other similar devices. In addition, the mobile apparatus 12 has installed an application program 220 and the application program 220 is stored in the memory 221. In this way, the mobile apparatus 12 interacts with the projection apparatus 11 by activating the application program 220.

The communication interface 222 of the mobile apparatus 12 may communicate with the communication interface 212 of the projection apparatus 11 through the connection 101. Besides, the communication interface 222 of the mobile apparatus 12 may also communicate with the network server 13 through the connection 102. In the embodiment, the communication interface 222 includes a basic circuit component configured to perform wireless transmission such as an antenna (not shown) and a radio frequency circuit (not shown). In the embodiment, the communication interface 222 is compatible with one or more types of short range wireless communication standards such as a Bluetooth communication protocol, a wireless fidelity communication protocol, a near field communication protocol, an infrared communication protocol or a ZigBee. It is noted that, in the present embodiment the communication interface 222 is also compatible with one or more types of wireless communication standards such as 3G, LTE, or GPRS. In another embodiment, the communication interface 222 is also compatible with the USB interface standard, the Ethernet interface standard and so on.

The processor 223 is configured to control various components (e.g., the memory 221 and the communication interface 212) within the mobile apparatus 12 and to process data. In the embodiment, the processor 223 is a central processing unit. In another embodiment, the processor 223 may also be one or a combination of the microprocessor, the digital signal processor, the programmable design controller, the dedicated integrated circuit, the programmable logic device or other similar processing devices described above. It is noted that the number of each of the memory 221, the communication interface 222, and the processor 223 may be one or more. For example, in an embodiment, a communication interface 222 of the mobile apparatus 12 is compatible with a specific short range wireless communication standard such as a Bluetooth communication protocol, and another communication interface 222 of the mobile apparatus 12 is compatible with another wireless communication standard such as long term evolution technology.

In an embodiment, the mobile apparatus 12 further includes at least one of a screen 224 and a sensing component 225. The screen 224 and the sensing component 225 are coupled to the processor 223, and the processor 223 may control the operation of the screen 224 and the sensing component 225. The screen 224 is configured to display an image and may be any type of touch screen or non-touch screen. The sensing component 225 is configured to sense environmental information and may be any type of sensing component deposited in the mobile apparatus 12, such as a proximity sensor, an acceleration sensor, a gravity sensor, a temperature sensor, a pressure sensor, or an image capturing device (e.g., a camera lens). Moreover, the number of the screens 224 and the sensing components 225 may respectively be one or more.

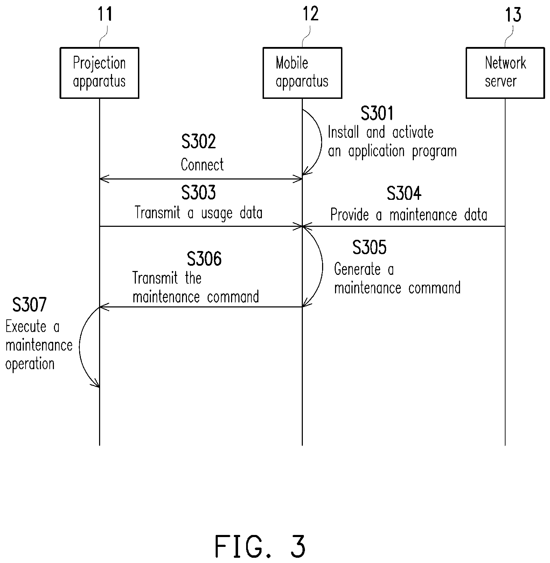

FIG. 3 is a flow chart illustrating a projection apparatus maintenance method according to an embodiment of the invention. Referring to Figs. 1, 2 and 3, in step S301, the processor 223 of the mobile apparatus 12 installs and activates the application program 220. It is noted that, after activating the application program 220, the application program 220 may control the processor 223 so that the processor 223 automatically executes the associated operations in the projection apparatus maintenance method. Moreover, since the processor 223 is controlled by the application program 220, the subsequent operations executed by the processor 223 of the mobile apparatus 12 may also be considered as the operations executed by the application program 220. In step S302, the processor 223 of the mobile apparatus 12 may instruct the communication interface 222 to connect the projection apparatus 11 and to establish the connection 101 with the communication interface 212 of the projection apparatus 11. When the communication interface 222 of the mobile apparatus 12 establishes a connection 101 with the communication interface 212 of the projection apparatus 11, in step S303, the projection apparatus 11 transmits the usage data corresponding to the projection apparatus 11 through the communication interface 212, and the mobile apparatus 12 receives the usage data through the communication interface 222. For example, in step S303, the usage data is transmitted through the connection 101.

In the embodiment, the usage data includes at least one of a software information, a hardware information, a projection parameter information, a system time information, a system setting information, a usage record information or a malfunction information corresponding to the projection apparatus 11, and the type of the usage data is not limited by the invention. For example, any information relating to the usage history of the projection apparatus 11 may be regarded as the usage data corresponding to the projection apparatus 11 and be recorded in the memory 211 of the projection apparatus 11 in real time after the projection apparatus 11 is turned on or powered. In step S303, these data may be read from the memory 211 and transmitted to the mobile apparatus 12 as at least a portion of the usage data.

In the embodiment, the software information includes information relating to the operating system, system programs and/or application programs installed in the projection apparatus 11. According to the software information, the processor 223 of the mobile apparatus 12 may obtain the related information such as the type and/or version of the operating system installed in the projection apparatus 11, the list and/or versions of the application programs installed in the projection apparatus 11, the execution status and/or its list of the system programs executed in the projection apparatus 11, or the application programs which are newly added in and/or removed from the projection apparatus 11.

In the embodiment, the hardware information includes information relating to hardware components in the projection apparatus 11. According to the hardware information, the processor 223 of the mobile apparatus 12 may obtain the related information of at least one hardware component of the projection apparatus 11, such as the equipment identification code, model, and specification. For example, the equipment identification code of a hardware component may include identification information, like a Media Access Control (MAC) address of the communication interface 214 and/or a unique identification code deposited by the manufacturer in the memory 211 which is used for identifying the projection apparatus 11.

In the embodiment, the projection parameter information includes information relating to projection parameters configured to adjust the projection image 110. According to the projection parameter information, the processor 223 of the mobile apparatus 12 may obtain the related information of the projection apparatus 11 currently or past used, like a projection size parameter, a projection shape parameter, a projection angle parameter, a projection focal length parameter, an image brightness parameter, an image resolution parameter, and an image color parameter. For example, the projection size parameter is configured to control the size of the projection image 110, the projection shape parameter is configured to control the shape of the projection image 110, the projection angle parameter is configured to control the angle of the projection apparatus 11 (or the projection unit 214) for projecting the projection image 110, the projection focal length parameter is configured to control the focal length of the optical projection lens of the projection unit 214 to make the projection image 110 clear, the image brightness parameter is configured to control the image brightness of the projection image 110, the image resolution parameter is configured to control the image resolution of the projection image 110, and the image color parameter is configured to control the image color of the projection image 110, e.g., color balance, color saturation, RGB contrast and other related parameters.

In the embodiment, the system time information includes information relating to the system time of the projection apparatus 11. According to the system time information, the processor 223 of the mobile apparatus 12 may obtain the current system time of the projection apparatus 11. In the embodiment, the system setting information includes information relating to the system setting of the projection apparatus 11. For example, according to the system setting information, the processor 223 of the mobile apparatus 12 may obtain the related information of the projection apparatus 11 currently or past used, like the power setting, the sleep setting and/or the standby setting.

In the embodiment, the usage record information includes information relating to the operation of the projection apparatus 11. According to the usage record information, the processor 223 of the mobile apparatus 12 may obtain the related information of the projection apparatus 11, like a network connection record, a projection time record, a projection content record, a boot/shutdown record, a user operation record, and/or a user login/logout record. In the present embodiment, the malfunction information includes information relating to an operation error of the projection apparatus 11. According to the malfunction information, the processor 223 of the mobile apparatus 12 may obtain the related information of the projection apparatus 11, such as system errors, system program errors, application program errors, and/or human operation errors.

Please referring to FIG. 3 again, in step S304, the mobile apparatus 12 receives the maintenance data corresponding to the projection apparatus 11 from the network server 13 through the communication interface 222. For example, the maintenance data is transmitted through the connection 102. In the embodiment, the maintenance data includes at least one of a software update information, a hardware update information, a projection parameter update information, a system time update information, a system setting update information, a malfunction diagnostic information or a schedule setting update information, which is not limited by the invention. For example, the software update information is used to update the information of the projection apparatus 11 such as an operating system, a system program, and/or an application program, the hardware update information is used to update the related information of the hardware components in the projection apparatus 11, the projection parameter update information is used to update the related information of the projection apparatus 11, like a projection size parameter, a projection shape parameter, a projection angle parameter, a projection focal length parameter, an image brightness parameter, an image resolution parameter, and an image color parameter, the system time update information is used to update the system time of the projection apparatus 11, the system setting update information is used to update the related information of the projection apparatus 11, like the power setting, the sleep setting and/or the standby setting, the malfunction diagnostic information is used for performing error handling for related erroneous information of the projection apparatus 11, such as a system error, a system program error, an application program error, and/or an human operation error, and the schedule setting update information is used to update a specific schedule work of the projection apparatus 11.

In step S305, the processor 223 of the mobile apparatus 12 generates at least one maintenance command according to the usage data from the projection apparatus 11 and/or the maintenance data from the network server 13. The maintenance command is used to enhance the efficiency of the projection apparatus 11 or to solve the current or future problems of the projection apparatus 11 that may be encountered. For example, in an embodiment, by (only) analyzing the usage data from the projection apparatus 11, the processor 223 of the mobile apparatus 12 can obtain the current usage status of the projection apparatus 11 and generate the maintenance command corresponding to the current usage status of the projection apparatus 11. Alternatively, in an embodiment, after receiving the maintenance data from the network server 13, the processor 223 of the mobile apparatus 12 may generate the corresponding maintenance command directly according to the maintenance data. Alternatively, in an embodiment, the processor 223 of the mobile apparatus 12 may analyze the usage data from the projection apparatus 11 and refer to the maintenance data from the network server 13 to generate the maintenance command that best meets the current usage status of the projection apparatus 11.

In an embodiment, the location of the mobile apparatus 12 may be in the same area as the location of the projection apparatus 11, so the processor 223 of the mobile apparatus 12 may generate the maintenance command according to the environmental information sensed by the sensing component 225. For example, the environmental information may include sensed ambient temperature, ambient humidity, ambient brightness, device shaking, device tilt angle, device acceleration, ambient pressure, the captured external images, and so on. For example, according to the ambient temperature sensed by the sensing components 225, the mobile apparatus 12 may instruct the projection apparatus 11 to change some system settings (e.g., to adjust the battery discharging state or the processor performance of the projection apparatus 11) or some projection parameter settings (e.g., to adjust the size or shape of the projection image 110) and so on by the maintenance command. Moreover, environmental information sensed by the sensing component 225 may also be used with the usage data of the projection apparatus 11 and/or the maintenance data from the network server 13, such that the mobile apparatus 12 may generate the maintenance command that best meets the current usage status of the projection apparatus 11. Alternatively, the mobile apparatus 12 can also transmit environmental information sensed by the sensing component 225 to the network server 13 and generate the corresponding maintenance command according to the maintenance data provided by the network server 13 corresponding to the uploaded environmental information.

In step S306, the mobile apparatus 12 transmits the maintenance command to the projection apparatus 11 through the communication interface 222, and the projection apparatus 11 receives the maintenance command through the communication interface 212. For example, the maintenance command is transmitted via the connection 101. In step S307, the processor 213 of the projection apparatus 11 executes a maintenance operation corresponding to the projection apparatus 11 according to the maintenance command.

It should be noted that, in an embodiment of FIG. 3, the projection apparatus 11 may register to the network server 13 through the mobile apparatus 12. Thereafter, the network server 13 may provide the maintenance data corresponding to the projection apparatus 11 to the mobile apparatus 12 at regular or at a specific time point (e. g., when it is necessary to update specific data of the projection apparatus 11) in accordance with the registration data corresponding to the projection apparatus 11. In another embodiment, the mobile apparatus 12 transmits the usage data of the projection apparatus 11 to the network server 13 through the communication interface 222, and the network server 13 may provide the corresponding maintenance data in real time according to the usage data sent by the projection apparatus 11 through the mobile apparatus 12.

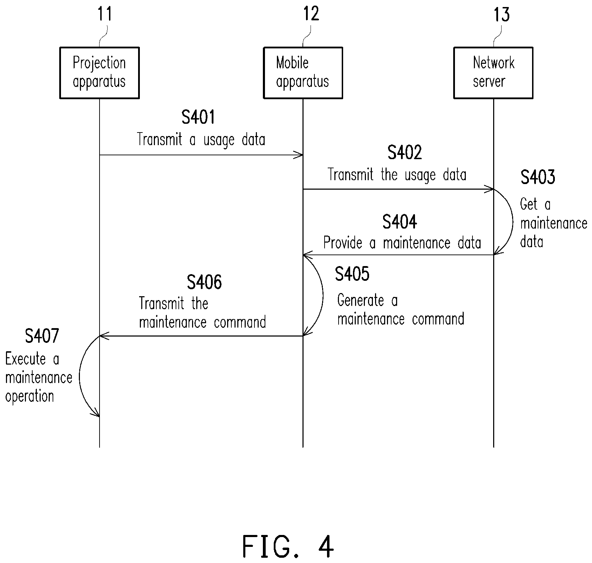

FIG. 4 is a flow chart illustrating a projection apparatus maintenance method according to another embodiment of the invention. Referring to Figs. 1, 2 and 4, in step S401, the projection apparatus 11 transmits the usage data corresponding to the projection apparatus 11 through the communication interface 212, and the mobile apparatus 12 receives the usage data through the communication interface 222. In step S402, the mobile apparatus 12 transmits the usage data corresponding to the projection apparatus 11 to the network server 13 through the communication interface 222. In step S403, the network server 13 queries and gets the corresponding maintenance data from database according to the usage data of the projection apparatus 11. For example, the usage data may carry identification information for identifying the projection apparatus 11 (e.g., the unique identification code of the projection apparatus 11 or the MAC of the communication interface 212). According to the usage data, the network server 13 may obtain information such as the model and/or the usage status of the projection apparatus 11 and accordingly extract the maintenance data that best meets the current usage status of the projection apparatus 11. The database may be, for example, a database provided from dealers, brands or manufacturers of the projection apparatus 11. In step S404, the network server 13 provides the corresponding maintenance data to the mobile apparatus 12 in correspondence to the usage data. Subsequent steps S405, S406 and S407 are the same with or similar to steps S305, S306 and S307 of Fig. 3, respectively, which are not described here. Furthermore, in one embodiment of Fig. 4, step S301 and step S302 of Fig. 3 may be performed before step S401.

In an embodiment, the database of the network server 13 also records the problems encountered with other projection apparatuses of the same with or similar model as the projection apparatus 11 being and the corresponding solutions. By querying the database, a specific solution may be selected and transmitted to the mobile apparatus 12 by being carried within the maintenance data.

In an embodiment, the maintenance command includes a projection parameter adjustment command. According to the projection parameter adjustment command, the processor 213 of the projection apparatus 11 executes a projection parameter adjustment operation corresponding to the projection unit 214 to adjust the projection image 110 projected by the projection apparatus 11. For example, in the projection parameter adjusting operation, the processor 213 of the projection apparatus 11 may update a specific projection parameter related to the projection image 110 that is stored in the memory 211, such as at least one of a projection size parameter, projected shape parameter, a projection angle parameter, a projection focal length parameter, an image brightness parameter, an image resolution parameter and an image color parameter. After one specific projection parameter is updated, the subsequent projection image 110 generated based on the specific projection parameter may be changed accordingly.

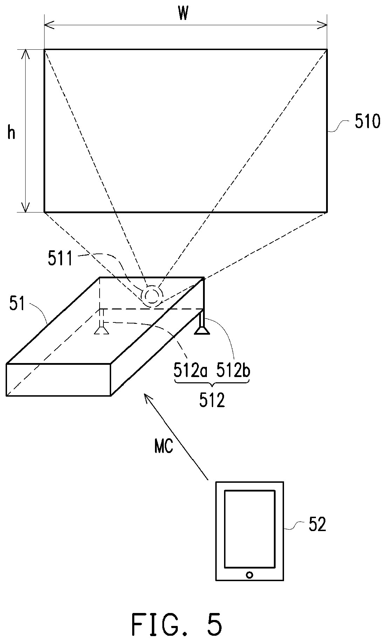

FIG. 5 is a schematic diagram illustrating a projection parameter adjustment operation according to an embodiment of the invention. Referring to FIG. 5, after receiving the maintenance command MC from the mobile apparatus 52, if the maintenance command MC includes the projection parameter adjustment command, at least one projection parameter of the projection apparatus 51 may be updated, thus affecting the size (e.g., the width W and/or the height h), the shape, the projection angle, the focal length, the image brightness, the image resolution and/or the image color of the subsequent projection image 510, etc. For example, in an exemplary embodiment, the apparatus state (e.g., the lens angle and the projection range, etc.) of the projection unit 511 of the projection apparatus 51 may be adjusted according to the updated projection parameter. In another embodiment, for example, the processor (not shown) of the projection apparatus 51 adjusts the size (e.g., the width W and/or the height h), the shape or the projection angle of the projection image 510 based on the projection parameter adjustment command in the received maintenance command MC. In other words, the projection apparatus 51 may control the projection unit 511 to perform a keystone correction on the projection image 510 automatically based on the projection parameter adjustment command. Alternatively, in an embodiment, the apparatus state of the supporting component set 512 (e.g., including supporting components 512a and 512b) of the projection apparatus 51 may also be adjusted automatically in accordance to the updated projection parameters, therefore changing the projection angle of the projection unit 511.

It should be noted that, FIG. 5 merely shows an example of a projection parameter adjustment operation and is not intended to limit the invention. In other non-mentioned embodiments, the rest adjustment operation for adjusting the projection image 510 may also be performed in accordance with the projection parameter adjustment command. Furthermore, the projection apparatus 51 (including the projection unit 511 and the supporting component set 512) and the projection image 510 as shown in Fig. 5 are exemplary. In other embodiments not mentioned, the projection apparatus 51 and the projection image 510 may have different structure and shape respectively.

In an embodiment of Fig. 5, the sensing component of the mobile apparatus 52 (e.g., the sensing component 225 in Figure 2) includes an image capturing device (not shown). For example, the image capturing device includes at least one camera lens. The mobile apparatus 52 may capture an image which covers the projection image 510 projected by the projection unit 511 through the image capturing device. Then, the mobile apparatus 52 may analyze the captured image which covers the projection image 510 to generate the maintenance command MC to instruct the projection apparatus 51 to perform the projection parameter adjustment operation on the projection image 510. Alternatively, the mobile apparatus 52 may also upload data relating to the captured image including the projection image 510 to the network server 13, and generate the maintenance command MC based on the maintenance data provided by the network server 13 corresponding to the uploaded data.

Referring to Figs. 1, 2 and 3, in one embodiment, the maintenance command includes a system update command. According to the system update command, the processor 213 of the projection apparatus 11 executes the system updating operation of the projection apparatus 11. For example, in the system update operation, the processor 213 of the projection apparatus 11 may update the operating system of the projection apparatus 11, newly add or deactivate a specific system program, install or remove a specific application. Besides, the processor 213 of the projection apparatus 11 may also update software information, hardware information, system time and/or specific system settings (e.g., the power setting, the sleep setting and/or the standby settings) recorded in the memory 211 in accordance with the system update command. In one embodiment, the processor 213 of the projection apparatus 11 may also repair errors existing in an operating system, in a system program or in an application program according to the system update command. With the above-mentioned update, the function of the projection apparatus 11 can be expanded and unnecessary functions can be eliminated, so it becomes easier for the user to operate.

In one embodiment, the system maintenance command includes a state switching command. According to the state switching command, the processor 213 of the projection apparatus 11 may switch the apparatus state of the projection apparatus 11 from one state (also referred to as a first state) to another state (also referred to as a second state). For example, according to the state switching command, the processor 213 of the projection apparatus 11 may control the projection apparatus 11 to automatically perform a specific state switching operation such as power on, shutdown, sleep, wake-up, lock, unlock, entering power saving mode or entering high-efficiency mode and so on. For example, in one embodiment, based on the received usage data of the projection apparatus 11, if the application program 220 of the mobile apparatus 12 evaluates that a start-up time (or work time) of the projection apparatus 11 is too long (e.g., exceeds a preset value), the mobile apparatus 12 may transmit a status switch command which instruct the projection apparatus 11 to shutdown (or restart/reboot) and the projection apparatus 11 may shutdown (or restart/reboot) automatically according to the status switch command. Alternatively, in one embodiment, if the application program 220 of the mobile apparatus 12 evaluates that the battery power of the projection apparatus 11 is less than a preset value, the mobile apparatus 12 may transmit a maintenance command including the state switching command to the projection apparatus 11 to instruct the projection apparatus 11 to enter the power saving mode and so on.

In one embodiment, the maintenance command includes a schedule command. According to the schedule command, the processor 213 of the projection apparatus 11 executes a corresponding specific schedule work further according to the system time of the projection apparatus 11. Thereby, even if the projection apparatus 11 is an earlier version device that does not support an active schedule management, the projection apparatus 11 may also automatically complete the corresponding schedule management operation according to the schedule command.

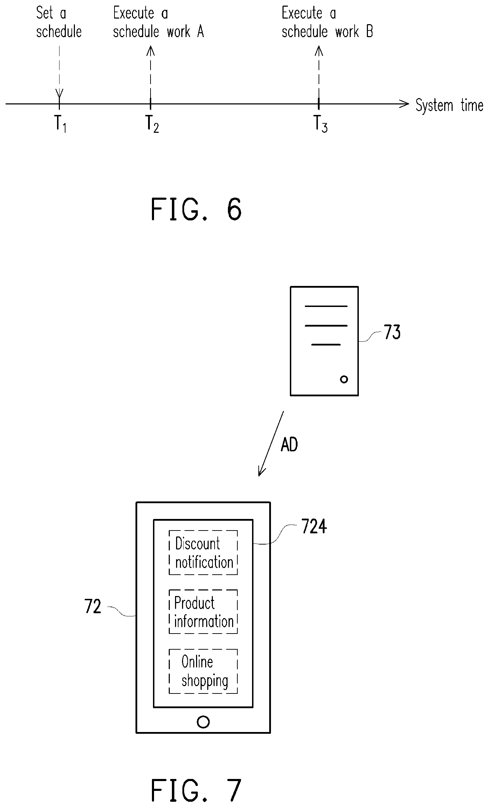

FIG. 6 is a schematic diagram illustrating a schedule work management according to an embodiment of the invention. Referring to Figs. 1, 2 and 6, it is assumed that the projection apparatus 11 receives a schedule command at time point T1. According to the schedule command, the processor 213 of the projection apparatus 11 sets a schedule work A to be executed at time point T2 and sets a schedule work B to be executed at time point T3 in the memory 211. In this way, when the system time of the projection apparatus 11 reaches the time point T2, the processor 213 of the projection apparatus 11 automatically executes the designated schedule work A, and when the system time of the projection apparatus 11 reaches the time point T3, the processor 213 of the projection apparatus 11 automatically executes the designated schedule work B. Herein, each of the schedule work A and the schedule work B may contain any of the operations mentioned in the preceding embodiments.

In one embodiment, the usage data corresponding to the projection apparatus 11 also includes sale information of the projection apparatus 11, such as, the name of a sale store of the projection apparatus 11, a sale city of the projection apparatus 11, a sale time of the projection apparatus 11 and/or purchaser's information of the projection apparatus 11, etc. Therefore, the network server 13 may receive the usage data of the projection apparatus 11 transmitted from the mobile apparatus 12, and analyze marketing situation of the projection apparatus 11 based on the usage data corresponding to the projection apparatus 11. For example, the analysis result related to the sale information of the projection apparatus 11 may be applied to the after-sales service or the advertisement pushing corresponding to the projection apparatus 11.

In one embodiment, the mobile apparatus 12 further receives advertisements pushing data corresponding to the projection apparatus 11 via the communication interface 222 from the network server 13 such as the after-sales service information, the sales information of related products, or online shopping information, and presents the advertisement pushing data through the application program 220 of the mobile apparatus 12.

FIG. 7 is a schematic diagram illustrating an advertisement pushing data according to an exemplary embodiment of the invention. Referring to FIG. 7, the network server 73 may provide the advertisement pushing data AD corresponding to the projection apparatus 11 to the mobile apparatus 72 based on the usage data of the projection apparatus 11 and/or the registration data of the projection apparatus 11. According to the advertisement pushing data AD, the application program (not shown) of the mobile apparatus 72 may display the corresponding advertisement interface on the screen 724 of the mobile apparatus 72. For example, the displayed advertisement interface may include one or more types of advertisement information, like discount notifications, product information, and online shopping. By operating the advertisement interface, the user may browse the relevant advertisement information, perform online shopping or report the operation experience of the projection apparatus 11, etc.

In summary, the projection apparatus maintenance system and the projection apparatus maintenance method of the invention can be implemented by the interaction between the projection apparatus, the mobile apparatus and the network server. In particular, for a projection apparatus that does not support the networking function and/or the advanced management function, through the communication connection between the projection apparatus and the mobile apparatus and the instruction instructing the projection apparatus to perform associated operations such as a projection image maintenance and/or a system maintenance, the operational flexibility of the projection apparatus can be improved and the usage life of the projection apparatus can be extended. In addition, for an operator or manufacturer, by collecting the usage data of specific projection apparatus which has been sold through the mobile apparatus or sending corresponding advertisement pushing data to mobile apparatus held by the consumer, the efficiency of market analysis and product after-sales service can also be improved.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A projection apparatus maintenance system (10), comprising:
a projection apparatus (11), comprising a first processor (213), a first communication interface (212) and a projection unit (214), wherein the first processor (213) is coupled to the first communication interface (212) and the projection unit (214), and the projection unit (214) projects a projection image (110) according to an image data; and
a mobile apparatus (12), comprising a second processor (223) and a second communication interface (222), wherein the second processor (223) is coupled to the second communication interface (222), wherein the mobile apparatus (12) has installed an application program (220), and the mobile apparatus (12) interacts with the projection apparatus (11) by activating the application program (220);
**characterized in that** when the projection apparatus (11) is connected to the mobile apparatus (12), the projection apparatus (11) transmits usage data corresponding to the projection apparatus (11) through the first communication interface (212) to the mobile apparatus (12), and the mobile apparatus (12) receives the usage data from the projection apparatus (11) through the second communication interface (222);
the mobile apparatus (12) receives maintenance data corresponding to the projection apparatus (11) from a network server (13) through the second communication interface (222);
the mobile apparatus (12) further comprises a sensing component (225) coupled to the second processor (223) and the sensing component (225) is configured to sense an environmental information, wherein the environmental information includes at least one of sensed ambient temperature, ambient humidity, ambient brightness, mobile apparatus shaking, mobile apparatus tilt angle, mobile apparatus acceleration, ambient pressure, and captured external images;
the application program (220) of the mobile apparatus (12) controls the second processor (223) to generate at least one maintenance command according to the environmental information sensed by the sensing component (225) and according to at least one of the usage data and the maintenance data and to transmit the at least one maintenance command through the second communication interface (222);
the projection apparatus (11) receives the at least one maintenance command through the first communication interface (212), and the first processor (213) of the projection apparatus (11) executes a maintenance operation corresponding to the projection apparatus (11) based on the at least one maintenance command;
wherein the at least one maintenance command comprises a system update command; and
wherein the maintenance operation executed by the first processor (213) of the projection apparatus (11) comprises a system update operation of the projection apparatus (11).

2. The projection apparatus maintenance system (10) as claimed in claim 1, **characterized in that** the at least one maintenance command comprises a projection parameter adjustment command,
wherein the maintenance operation executed by the first processor (213) of the projection apparatus (11) comprises a projection parameter adjustment operation corresponding to the projection unit (214), wherein the projection parameter adjustment operation is configured to adjust the projection image (110).

3. The projection apparatus maintenance system (10) as claimed in any one of the preceding claims, **characterized in that** the at least one maintenance command comprises a schedule command,
wherein the maintenance operation executed by the first processor (213) of the projection apparatus (11) comprises a specific schedule work which is executed according to a system time of the projection apparatus (11).

4. The projection apparatus maintenance system (10) as claimed in any one of the preceding claims, **characterized in that** the at least one maintenance command comprises a state switch command,
wherein the maintenance operation executed by the first processor (213) of the projection apparatus (11) comprises switching an apparatus state of the projection apparatus (11) from a first state to a second state.

5. The projection apparatus maintenance system (10) as claimed in any one of the preceding claims, **characterized in that** the sensing component (225) comprises an image capturing device which is configured to capture the projection image (110, 510) projected by the projection unit (214, 511) of the projection apparatus (11, 51),
wherein the environmental information sensed by the sensing component (225) comprises the projection image (110, 510) captured by the image capturing device.

6. The projection apparatus maintenance system (10) as claimed in any one of the preceding claims, **characterized in that** the application program (220) of the mobile apparatus (12, 52) further transmits the usage data to the network server (13) through the second communication interface (222), and the network server (13) provides the maintenance data in correspondence to the transmitted usage data.

7. The projection apparatus maintenance system (10) as claimed in any one of the preceding claims, **characterized in that** the usage data comprises at least one of a software information, a hardware information, a projection parameter information, a system time information, a system setting information, a usage record information and a malfunction information corresponding to the projection apparatus (11).

8. The projection apparatus maintenance system (10) as claimed in any one of the preceding claims, **characterized in that** the maintenance data comprises at least one of a software update information, a hardware update information, a projection parameter update information, a system time update information, a system setting update information, a malfunction diagnostic information and a schedule setting update information.

9. The projection apparatus maintenance system (10) as claimed in any one of the preceding claims, **characterized in that** the mobile apparatus (12, 52) is adapted to further receive an advertisement pushing data corresponding to the projection apparatus (11) from the network server (13) through the second communication interface (222), and the mobile apparatus (12, 52) further presents the advertisement pushing data through the application program (220) of the mobile apparatus (12, 52).

10. A projection apparatus maintenance method, for a projection apparatus (11) having a communication interface (212) and a projection unit (214, 511), wherein the projection unit (214, 511) projects a projection image (110, 510) according to an image data, the projection apparatus maintenance method is **characterized by**:
transmitting (S303, S401) usage data corresponding to the projection apparatus (11) to a mobile apparatus (12, 52) through the communication interface (212);
transmitting (S402) the usage data to a network server (13) and receiving (S306, S406) maintenance data which is provided by the network server (13) in correspondence to the transmitted usage data through the mobile apparatus (12, 52);
receiving at least one maintenance command from the mobile apparatus (12, 52) through the communication interface (212); and
executing (S307, S407) a maintenance operation corresponding to the projection apparatus (11) according to the at least one maintenance command;
wherein the at least one maintenance command comprises at least a system update command; and
wherein the step of executing (S307, S407) the maintenance operation corresponding to the projection apparatus (11) according to the at least one maintenance command comprises executing a system update operation of the projection apparatus according to the system update command;
wherein the mobile apparatus (12, 52) has installed an application program (220), and the mobile apparatus (12, 52) interacts with the projection apparatus (11) by activating (S301) the application program (220);
wherein the step of transmitting (S303, S402) the usage data to the network server (13) and receiving (S306, S406) the maintenance data which is provided (S304, S404) by the network server (13) corresponding to the transmitted usage data through the mobile apparatus (12, 52) comprises:
generating (S305, S405) the at least one maintenance command according to an environmental information sensed by a sensing component (225) of the mobile apparatus (12, 52) and according to at least one of the usage data and the maintenance data through the application program (220) of the mobile apparatus (12, 52), wherein the environmental information includes at least one of sensed ambient temperature, ambient humidity, ambient brightness, mobile apparatus shaking, mobile apparatus tilt angle, mobile apparatus acceleration, ambient pressure, and captured external images.

11. The projection apparatus maintenance method as claimed in claim 10, **characterized in that** the at least one maintenance command comprises at least one of:
a projection parameter adjustment command, wherein the step of executing (S307, S407) the maintenance operation corresponding to the projection apparatus (11) according to the at least one maintenance command comprises executing a projection parameter adjustment operation corresponding to the projection unit (214, 511) according to the projection parameter adjustment command to adjust the projection image (110, 510); or
a schedule command, wherein the step of executing (S307, S407) the maintenance operation corresponding to the projection apparatus (11) according to the at least one maintenance command comprises executing a specific schedule work according to a system time of the projection apparatus and the schedule command; or
a state switch command, wherein the step of executing (S307, S407) the maintenance operation corresponding to the projection apparatus (11) according to the at least one maintenance command comprises switching an apparatus state of the projection apparatus from a first state to a second state according to the state switch command.

12. The projection apparatus maintenance method as claimed in claim 11, **characterized in that** the sensing component (225) comprises an image capturing device which is configured to capture the projection image (110, 510) projected by the projection unit (214, 511) of the projection apparatus (11),
wherein the environmental information sensed by the sensing component (225) comprises the projection image (110, 510) captured by the image capturing device.

## Patentansprüche

1. Projektionsvorrichtungs-Wartungssystem (10), das Folgendes umfasst:
eine Projektionsvorrichtung (11), die einen ersten Prozessor (213), eine erste Kommunikationsschnittstelle (212) und eine Projektionseinheit (214) umfasst, wobei der erste Prozessor (213) mit der ersten Kommunikationsschnittstelle (212) und der Projektionseinheit (214) gekoppelt ist und die Projektionseinheit (214) gemäß Bilddaten ein Projektionsbild (110) projiziert; und
eine mobile Vorrichtung (12), die einen zweiten Prozessor (223) und eine zweite Kommunikationsschnittstelle (222) umfasst, wobei der zweite Prozessor (223) mit der zweiten Kommunikationsschnittstelle (222) gekoppelt ist, wobei in der mobilen Vorrichtung (12) ein Anwendungsprogramm (220) installiert ist und die mobile Vorrichtung (12) mit der Projektionsvorrichtung (11) in Wechselwirkung tritt, indem das Anwendungsprogramm (220) aktiviert wird;
**dadurch gekennzeichnet, dass** dann, wenn die Projektionsvorrichtung (11) mit der mobilen Vorrichtung (12) verbunden ist, die Projektionsvorrichtung (11) Nutzungsdaten, die der Projektionsvorrichtung (11) entsprechen, durch die erste Kommunikationsschnittstelle (212) an die mobile Vorrichtung (12) überträgt und die mobile Vorrichtung (12) die Nutzungsdaten durch die zweite Kommunikationsschnittstelle (222) von der Projektionsvorrichtung (11) empfängt;
die mobile Vorrichtung (12) Wartungsdaten, die der Projektionsvorrichtung (11) entsprechen, durch die zweite Kommunikationsschnittstelle (222) von einem Netzserver (13) empfängt;
die mobile Vorrichtung (12) ferner eine Erfassungskomponente (225) umfasst, die mit dem zweiten Prozessor (223) gekoppelt ist, und die Erfassungskomponente (225) konfiguriert ist, Umweltinformationen zu erfassen, wobei die Umweltinformationen eine erfasste Umgebungstemperatur und/oder Umgebungsfeuchtigkeit und/oder Umgebungshelligkeit und/oder Erschütterung der mobilen Vorrichtung und/oder einen erfassten Neigungswinkel der mobilen Vorrichtung und/oder eine erfasste Beschleunigung der mobilen Vorrichtung und/oder einen erfassten Umgebungsdruck und/oder aufgenommene externe Bilder enthalten;
das Anwendungsprogramm (220) der mobilen Vorrichtung (12) den zweiten Prozessor (223) derart steuert, dass mindestens ein Wartungsbefehl gemäß den Umgebungsinformationen, die durch die Erfassungskomponente (225) erfasst werden, und gemäß den Nutzungsdaten und/oder den Wartungsdaten erzeugt wird und der mindestens eine Wartungsbefehl durch die zweite Kommunikationsschnittstelle (222) übertragen wird;
die Projektionsvorrichtung (11) den mindestens einen Wartungsbefehl durch die erste Kommunikationsschnittstelle (212) empfängt und der erste Prozessor (213) der Projektionsvorrichtung (11) auf der Grundlage des mindestens einen Wartungsbefehls einen Wartungsvorgang ausführt, der der Projektionsvorrichtung (11) entspricht;
wobei der mindestens eine Wartungsbefehl einen Systemaktualisierungsbefehl umfasst; und
wobei der Wartungsvorgang, der durch den ersten Prozessor (213) der Projektionsvorrichtung (11) ausgeführt wird, einen Systemaktualisierungsvorgang der Projektionsvorrichtung (11) umfasst.

2. Projektionsvorrichtungs-Wartungssystem (10) nach Anspruch 1, **dadurch gekennzeichnet, dass** der mindestens eine Wartungsbefehl einen Projektionsparameter-Einstellungsbefehl umfasst,
wobei der Wartungsvorgang, der durch den ersten Prozessor (213) der Projektionsvorrichtung (11) ausgeführt wird, einen Projektionsparameter-Einstellungsvorgang, der der Projektionseinheit (214) entspricht, umfasst, wobei der Projektionsparameter-Einstellungsvorgang konfiguriert ist, das Projektionsbild (110) einzustellen.

3. Projektionsvorrichtungs-Wartungssystem (10) nach einem der vorhergehenden Ansprüche, **dadurch gekennzeichnet, dass** der mindestens eine Wartungsbefehl einen Zeitplanbefehl umfasst,
wobei der Wartungsvorgang, der durch den ersten Prozessor (213) der Projektionsvorrichtung (11) ausgeführt wird, eine bestimmte Zeitplanarbeit umfasst, die gemäß einer Systemzeit der Projektionsvorrichtung (11) ausgeführt wird.

4. Projektionsvorrichtungs-Wartungssystem (10) nach einem der vorhergehenden Ansprüche, **dadurch gekennzeichnet, dass** der mindestens eine Wartungsbefehl einen Zustandsumschaltungsbefehl umfasst,
wobei der Wartungsvorgang, der durch den ersten Prozessor (213) der Projektionsvorrichtung (11) ausgeführt wird, das Umschalten eines Vorrichtungszustands der Projektionsvorrichtung (11) aus einem ersten Zustand in einen zweiten Zustand umfasst.

5. Projektionsvorrichtungs-Wartungssystem (10) nach einem der vorhergehenden Ansprüche, **dadurch gekennzeichnet, dass** die Erfassungskomponente (225) eine Bildaufnahmeeinrichtung umfasst, die konfiguriert ist, das Projektionsbild (110, 510), das durch die Projektionseinheit (214, 511) der Projektionsvorrichtung (11, 51) projiziert wird, aufzunehmen,
wobei die Umweltinformationen, die durch die Erfassungskomponente (225) erfasst werden, das Projektionsbild (110, 510), das durch die Bildaufnahmeeinrichtung aufgenommen wird, umfassen.

6. Projektionsvorrichtungs-Wartungssystem (10) nach einem der vorhergehenden Ansprüche, **dadurch gekennzeichnet, dass** das Anwendungsprogramm (220) der mobilen Vorrichtung (12, 52) ferner die Nutzungsdaten durch die zweite Kommunikationsschnittstelle (222) an den Netzserver (13) überträgt und der Netzserver (13) die Wartungsdaten in Übereinstimmung mit den übertragenen Nutzungsdaten bereitstellt.

7. Projektionsvorrichtungs-Wartungssystem (10) nach einem der vorhergehenden Ansprüche, **dadurch gekennzeichnet, dass** die Nutzungsdaten Softwareinformationen und/oder Hardwareinformationen und/oder Projektionsparameterinformationen und/oder Systemzeitinformationen und/oder Systemeinstellungsinformationen und/oder Nutzungsaufzeichnungsinformationen und/oder Fehlfunktionsinformationen, die der Projektionsvorrichtung (11) entsprechen, umfassen.

8. Projektionsvorrichtungs-Wartungssystem (10) nach einem der vorhergehenden Ansprüche, **dadurch gekennzeichnet, dass** die Wartungsdaten Softwareaktualisierungsinformationen und/oder Hardwareaktualisierungsinformationen und/oder Projektionsparameter-Aktualisierungsinformationen und/oder Systemzeit-Aktualisierungsinformationen und/oder Systemeinstellungs-Aktualisierungsinformationen und/oder Fehlfunktions-Diagnoseinformationen und/oder Zeitplaneinstellungs-Aktualisierungsinformationen umfassen.

9. Projektionsvorrichtungs-Wartungssystem (10) nach einem der vorhergehenden Ansprüche, **dadurch gekennzeichnet, dass** die mobile Vorrichtung (12, 52) ausgelegt ist, ferner Werbungsforcierungsdaten, die der Projektionsvorrichtung (11) entsprechen, durch die zweite Kommunikationsschnittstelle (222) vom Netzserver (13) zu empfangen und die mobile Vorrichtung (12, 52) ferner die Werbungsforcierungsdaten durch das Anwendungsprogramm (220) der mobilen Vorrichtung (12, 52) darstellt.

10. Projektionsvorrichtungs-Wartungsverfahren für eine Projektionsvorrichtung (11), die eine Kommunikationsschnittstelle (212) und eine Projektionseinheit (214, 511) aufweist, wobei die Projektionseinheit (214, 511) gemäß Bilddaten ein Projektionsbild (110, 510) projiziert, wobei das Projektionsvorrichtungs-Wartungsverfahren **gekennzeichnet ist durch**:
Übertragen (S303, S401) von Nutzungsdaten, die der Projektionsvorrichtung (11) entsprechen, **durch** die Kommunikationsschnittstelle (212) an eine mobile Vorrichtung (12, 52);
Übertragen (S402) der Nutzungsdaten an einen Netzserver (13) und Empfangen (S306, S406) von Wartungsdaten, die **durch** den Netzserver (13) in Übereinstimmung mit den übertragenen Nutzungsdaten bereitgestellt werden, **durch** die mobile Vorrichtung (12, 52);
Empfangen von mindestens einem Wartungsbefehl **durch** die Kommunikationsschnittstelle (212) von der mobilen Vorrichtung (12, 52); und
Ausführen (S307, S407) eines Wartungsvorgangs, der der Projektionsvorrichtung (11) entspricht, gemäß dem mindestens einen Wartungsbefehl;
wobei der mindestens eine Wartungsbefehl mindestens einen Systemaktualisierungsbefehl umfasst; und
wobei der Schritt des Ausführens (S307, S407) des Wartungsvorgangs, der der Projektionsvorrichtung (11) entspricht, gemäß dem mindestens einen Wartungsbefehl das Ausführen eines Systemaktualisierungsvorgangs der Projektionsvorrichtung gemäß dem Systemaktualisierungsbefehl umfasst;
wobei in der mobilen Vorrichtung (12, 52) ein Anwendungsprogramm (220) installiert ist und die mobile Vorrichtung (12, 52) mit der Projektionsvorrichtung (11) in Wechselwirkung tritt, indem das Anwendungsprogramm (220) aktiviert (S301) wird;
wobei der Schritt des Übertragens (S303, S402) der Nutzungsdaten an den Netzserver (13) und des Empfangens (S306, S406) der Wartungsdaten, die **durch** den Netzserver (13) entsprechend den übertragenen Nutzungsdaten bereitgestellt (S304, S404) werden, **durch** die mobile Vorrichtung (12, 52) Folgendes umfasst:
Erzeugen (S305, S405) des mindestens einen Wartungsbefehls gemäß Umweltinformationen, die **durch** eine Erfassungskomponente (225) der mobilen Vorrichtung (12, 52) erfasst werden, und gemäß den Nutzungsdaten und/oder den Wartungsdaten **durch** das Anwendungsprogramm (220) der mobilen Vorrichtung (12, 52), wobei die Umweltinformationen eine(n) erfasste(n) Umgebungstemperatur und/oder Umgebungsfeuchtigkeit und/oder Umgebungshelligkeit und/oder Erschütterung der mobilen Vorrichtung und/oder Neigungswinkel der mobilen Vorrichtung und/oder Beschleunigung der mobilen Vorrichtung und/oder Umgebungsdruck und/oder aufgenommene externe Bilder enthalten.

11. Projektionsvorrichtungs-Wartungsverfahren nach Anspruch 10, **dadurch gekennzeichnet, dass** der mindestens eine Wartungsbefehl Folgendes umfasst:
einen Projektionsparameter-Einstellungsbefehl, wobei der Schritt des Ausführens (S307, S407) des Wartungsvorgangs, der der Projektionsvorrichtung (11) entspricht, gemäß dem mindestens einen Wartungsbefehl das Ausführen eines Projektionsparameter-Einstellungsvorgangs, der der Projektionseinheit (214, 511) entspricht, gemäß dem Projektionsparameter-Einstellungsbefehl, um das Projektionsbild (110, 510) einzustellen, umfasst; und/oder
einen Zeitplanbefehl, wobei der Schritt des Ausführens (S307, S407) des Wartungsvorgangs, der der Projektionsvorrichtung (11) entspricht, gemäß dem mindestens einen Wartungsbefehl das Ausführen einer bestimmten Zeitplanarbeit gemäß einer Systemzeit der Projektionsvorrichtung und dem Zeitplanbefehl umfasst; und/oder
einen Zustandsumschaltungsbefehl, wobei der Schritt des Ausführens (S307, S407) des Wartungsvorgangs, der der Projektionsvorrichtung (11) entspricht, gemäß dem mindestens einen Wartungsbefehl das Umschalten eines Vorrichtungszustands der Projektionsvorrichtung aus einem ersten Zustand in einen zweiten Zustand gemäß dem Zustandsumschaltungsbefehl umfasst.

12. Projektionsvorrichtungs-Wartungsverfahren nach Anspruch 11, **dadurch gekennzeichnet, dass** die Erfassungskomponente (225) eine Bildaufnahmeeinrichtung umfasst, die konfiguriert ist, das Projektionsbild (110, 510), das durch die Projektionseinheit (214, 511) der Projektionsvorrichtung (11) projiziert wird, aufzunehmen,
wobei die Umweltinformationen, die durch die Erfassungskomponente (225) erfasst werden, das Projektionsbild (110, 510), das durch die Bildaufnahmeeinrichtung aufgenommen wird, umfassen.

## Revendications

1. Système de maintenance d'appareil de projection (10), comportant :
un appareil de projection (11), comportant un premier processeur (213), une première interface de communication (212) et une unité de projection (214), dans lequel le premier processeur (213) est couplé à la première interface de communication (212) et à l'unité de projection (214), et l'unité de projection (214) projette une image de projection (110) en fonction d'une données d'image ; et
un appareil mobile (12), comportant un second processeur (223) et une seconde interface de communication (222), dans lequel le second processeur (223) est couplé à la seconde interface de communication (222), dans lequel l'appareil mobile (12) a installé un programme d'application (220), et l'appareil mobile (12) interagit avec l'appareil de projection (11) en activant le programme d'application (220) ;
**caractérisé en ce que** lorsque l'appareil de projection (11) est connecté à l'appareil mobile (12), l'appareil de projection (11) transmet à l'appareil mobile (12) des données d'utilisation correspondant à l'appareil de projection (11) via la première interface de communication (212), et l'appareil mobile (12) reçoit les données d'utilisation provenant de l'appareil de projection (11) via la seconde interface de communication (222) ;
l'appareil mobile (12) reçoit des données de maintenance correspondant à l'appareil de projection (11) provenant d'un serveur de réseau (13) via la seconde interface de communication (222) ;
l'appareil mobile (12) comporte en outre un composant de détection (225) couplé au second processeur (223) et le composant de détection (225) est configuré pour détecter une information environnementale, dans lequel l'information environnementale inclut au moins un élément parmi une température ambiante détectée, une humidité ambiante détectée, une luminosité ambiante détectée, une secousse d'appareil mobile détectée, un angle d'inclinaison d'appareil mobile détecté, une accélération d'appareil mobile détectée, une pression ambiante détectée et des images externes capturées détectées ;
le programme d'application (220) de l'appareil mobile (12) commande au second processeur (223) de générer au moins une instruction de maintenance en fonction de l'information environnementale détectée par le composant de détection (225) et en fonction d'au moins un élément parmi les données d'utilisation et les données de maintenance et de transmettre la au moins une instruction de maintenance via la seconde interface de communication (222) ;
l'appareil de projection (11) reçoit la au moins une instruction de maintenance via la première interface de communication (212), et le premier processeur (213) de l'appareil de projection (11) exécute une opération de maintenance correspondant à l'appareil de projection (11) sur la base de la au moins une instruction de maintenance ;
dans lequel la au moins une instruction de maintenance comporte une instruction de mise à jour de système ; et
dans lequel l'opération de maintenance exécutée par le premier processeur (213) de l'appareil de projection (11) comporte une opération de mise à jour de système de l'appareil de projection (11).

2. Système de maintenance d'appareil de projection (10) selon la revendication 1, **caractérisé en ce que** la au moins une instruction de maintenance comporte une instruction de réglage de paramètre de projection,
dans lequel l'opération de maintenance exécutée par le premier processeur (213) de l'appareil de projection (11) comporte une opération de réglage de paramètre de projection correspondant à l'unité de projection (214), dans lequel l'opération de réglage de paramètre de projection est configurée pour régler l'image de projection (110).

3. Système de maintenance d'appareil de projection (10) selon l'une quelconque des revendications précédentes, **caractérisé en ce que** la au moins une instruction de maintenance comporte une instruction de planification,
dans lequel l'opération de maintenance exécutée par le premier processeur (213) de l'appareil de projection (11) comporte un travail de planification spécifique qui est exécuté en fonction d'une heure de système de l'appareil de projection (11).

4. Système de maintenance d'appareil de projection (10) selon l'une quelconque des revendications précédentes, **caractérisé en ce que** la au moins une instruction de maintenance comporte une instruction de basculement d'état,
dans lequel l'opération de maintenance exécutée par le premier processeur (213) de l'appareil de projection (11) comporte le basculement d'un état d'appareil de l'appareil de projection (11) d'un premier état à un second état.

5. Système de maintenance d'appareil de projection (10) selon l'une quelconque des revendications précédentes, **caractérisé en ce que** le composant de détection (225) comporte un dispositif de capture d'image qui est configuré pour capturer l'image de projection (110, 510) projetée par l'unité de projection (214, 511) de l'appareil de projection (11, 51),
dans lequel l'information environnementale détectée par le composant de détection (225) comporte l'image de projection (110, 510) capturée par le dispositif de capture d'image.

6. Système de maintenance d'appareil de projection (10) selon l'une quelconque des revendications précédentes, **caractérisé en ce que** le programme d'application (220) de l'appareil mobile (12, 52) transmet en outre les données d'utilisation au serveur de réseau (13) via la seconde interface de communication (222), et le serveur de réseau (13) fournit les données de maintenance en correspondance avec les données d'utilisation transmises.

7. Système de maintenance d'appareil de projection (10) selon l'une quelconque des revendications précédentes, **caractérisé en ce que** les données d'utilisation comportent au moins une information parmi une information de logiciel, une information de matériel, une information de paramètre de projection, une information d'heure de système, une information de paramétrage de système, une information d'enregistrement d'utilisation et une information de dysfonctionnement correspondant à l'appareil de projection (11).

8. Système de maintenance d'appareil de projection (10) selon l'une quelconque des revendications précédentes, **caractérisé en ce que** les données de maintenance comportent au moins une information parmi une information de mise à jour de logiciel, une information de mise à jour de matériel, une information de mise à jour de paramètre de projection, une information de mise à jour d'heure de système, une information de mise à jour de paramétrage de système, une information de diagnostic de dysfonctionnement et une information de mise à jour de paramétrage de planification.

9. Système de maintenance d'appareil de projection (10) selon l'une quelconque des revendications précédentes, **caractérisé en ce que** l'appareil mobile (12, 52) est adapté pour recevoir en outre une donnée d'incitation publicitaire correspondant à l'appareil de projection (11) provenant du serveur de réseau (13) via la seconde interface de communication (222), et l'appareil mobile (12, 52) présente en outre les données d'incitation publicitaire via le programme d'application (220) de l'appareil mobile (12, 52).

10. Procédé de maintenance d'appareil de projection, pour un appareil de projection (11) ayant une interface de communication (212) et une unité de projection (214, 511), dans lequel l'unité de projection (214, 511) projette une image de projection (110, 510) en fonction d'une données d'image, le procédé de maintenance d'appareil de projection étant **caractérisé par** les étapes consistant à :
transmettre (S303, S401) à un appareil mobile (12, 52) des données d'utilisation correspondant à l'appareil de projection (11) via l'interface de communication (212) ;
transmettre (S402) les données d'utilisation à un serveur de réseau (13) et recevoir (S306, S406) des données de maintenance qui sont fournies par le serveur de réseau (13) en correspondance avec les données d'utilisation transmises via l'appareil mobile (12, 52) ;
recevoir au moins une instruction de maintenance provenant de l'appareil mobile (12, 52) via l'interface de communication (212) ; et
exécuter (S307, S407) une opération de maintenance correspondant à l'appareil de projection (11) en fonction de la au moins une instruction de maintenance ;
dans lequel la au moins une instruction de maintenance comporte au moins une instruction de mise à jour de système ; et
dans lequel l'étape d'exécution (S307, S407) de l'opération de maintenance correspondant à l'appareil de projection (11) en fonction de la au moins une instruction de maintenance comporte l'exécution d'une opération de mise à jour de système de l'appareil de projection en fonction de l'instruction de mise à jour de système ;
dans lequel l'appareil mobile (12, 52) a installé un programme d'application (220), et l'appareil mobile (12, 52) interagit avec l'appareil de projection (11) en activant (S301) le programme d'application (220) ;
dans lequel l'étape de transmission (S303, S402) des données d'utilisation au serveur de réseau (13) et de réception (S306, S406) des données de maintenance qui sont fournies (S304, S404) par le serveur de réseau (13) correspondant aux données d'utilisation transmises via l'appareil mobile (12, 52) comporte de :
générer (S305, S405) la au moins une instruction de maintenance en fonction d'une information environnementale détectée par un composant de direction (225) de l'appareil mobile (12, 52) et en fonction d'au moins un élément parmi les données d'utilisation et les données de maintenance via le programme d'application (220) de l'appareil mobile (12, 52), dans lequel l'information environnementale inclut au moins un élément parmi une température ambiante détectée, une humidité ambiante détectée, une luminosité ambiante détectée, une secousse d'appareil mobile détectée, un angle d'inclinaison d'appareil mobile détecté, une accélération d'appareil mobile détectée, une pression ambiante détectée et des images externes capturées détectées.

11. Procédé de maintenance d'appareil de projection selon la revendication 10, **caractérisé en ce que** la au moins une instruction de maintenance comporte au moins une instruction parmi :
une instruction de réglage de paramètre de projection, dans lequel l'étape d'exécution (S307, S407) de l'opération de maintenance correspondant à l'appareil de projection (11) en fonction de la au moins une instruction de maintenance comporte l'exécution d'une opération de réglage de paramètre de projection correspondant à l'unité de projection (214, 511) en fonction de l'instruction de réglage de paramètre de projection pour régler l'image de projection (110, 510) ; ou
une instruction de planification, dans lequel l'étape d'exécution (S307, S407) de l'opération de maintenance correspondant à l'appareil de projection (11) en fonction de la au moins une instruction de maintenance comporte l'exécution d'un travail de planification spécifique en fonction d'une heure de système de l'appareil de projection et de l'instruction de planification ; ou
une instruction de basculement d'état, dans lequel l'étape d'exécution (S307, S407) de l'opération de maintenance correspondant à l'appareil de projection (11) en fonction de la au moins une instruction de maintenance comporte le basculement d'un état d'appareil de l'appareil de projection d'un premier état à un second état en fonction de l'instruction de basculement d'état.

12. Procédé de maintenance d'appareil de projection selon la revendication 11, **caractérisé en ce que** le composant de détection (225) comporte un dispositif de capture d'image qui est configuré pour capturer l'image de projection (110, 510) projetée par l'unité de projection (241, 511) de l'appareil de projection (11),
dans lequel l'information environnementale détectée par le composant de détection (225) comporte l'image de projection (110, 510) capturée par le dispositif de capture d'image.
